# EUROPÄISCHE PATENTSCHRIFT

(11) **EP 2 865 565 B1**
(45) Veröffentlichungstag und Bekanntmachung des Hinweises auf die Patenterteilung: **19.04.2017**
(21) Anmeldenummer: 14189901.3
(22) Anmeldetag: 22.10.2014
(51) Int. Cl.: B60P 1/28, B60P 3/42

(54) **Fest-Flüssig-Anhänger mit doppelter Raumausnutzung durch innenliegende Wanne**
Solid-liquid trailer with double usage of space with internal tub
Remorque pour matières solides et liquides avec double exploitation du volume grâce à une cuve intérieure

(30) Priorität: 24.10.2013 DE 202013104790 U
(43) Veröffentlichungstag der Anmeldung: 29.04.2015
(73) Patentinhaber: Terbrack, Norbert, 48691 Vreden (DE); Wilhelm Severt Maschinenbau GmbH, 48691 Vreden (DE)
(72) Erfinder: Terbrack, Norbert, 48691 Vreden (DE); Severt, Wilhelm Dr., 48691 Vreden (DE)
(74) Vertreter: Habbel, Ludwig

(56) Entgegenhaltungen:
- EP-A1- 0 278 339
- DE-A1-102012 015 555
- DE-U1-202007 010 966
- DE-U1-202009 005 174

## Beschreibung

Die Erfindung betrifft einen Fest-Flüssig-Anhänger nach dem Oberbegriff des Anspruchs 1.

Aus der DE 202009005174 U1 ist ein solcher Fest-Flüssig-Anhänger bekannt. Die beweglichen Elemente, die innerhalb des Behälters und oberhalb von dessen Boden angeordnet sind, dienen bei dem bekannten Fest-Flüssig-Anhänger als Schwappschutz bzw. Schwallbleche, welche die Fahrstabilität des Anhängers erhöhen, wenn dieser mit flüssiger Ladung gefahren wird.

Aus der DE 10 2012 015555 A1 ist eine Kippermulde zum Aufnehmen von Schüttgütern eines Schüttgut-Muldenkippers zum Transportieren der Schüttgüter bekannt, bei welchem die Kippermulde eine durch ein Bodenelement und durch darauf aufbauende Seitenwandelemente begrenzte Kavität ausgestaltet, wobei die durch das Bodenelement und durch die Seitenwandelemente begrenzte Kavität flüssigkeitsdicht verschließbar ist, um mit der Kippermulde Flüssigkeiten zu transportieren.

Aus der EP 0 278 339 A1 ist ein Fahrzeug mit faltbaren Tanks zum Transportieren flüssiger Güter und einem bewegbaren Boden zum Transportieren fester Güter als eine Alternative zu flüssigen Gütern bekannt.

Aus der DE 20 2007 010966 U1 ist bekannt ein Transportfahrzeug mit einem Fahrzeugrahmen, einem Fahrwerk und einem Aufbau, bei welchem im unteren Teil des Transportfahrzeugs im Wesentlichen ein Transporttank und im oberen Teil des Transportfahrzeugs im Wesentlichen eine Transportmulde eingebaut ist.

Der Erfindung liegt die Aufgabe zugrunde, einen gattungsgemäßen Fest-Flüssig-Anhänger dahingehend zu verbessern, dass dieser einen verunreinigungsfreien abwechselnden Transport von festen und flüssigen Ladegütern ermöglicht.

Diese Aufgabe wird durch einen Fest-Flüssig-Anhänger mit den Merkmalen des Anspruchs 1 gelöst. Vorteilhafte Ausgestaltungen der Erfindung sind in den Unteransprüchen beschrieben.

Die Erfindung schlägt mit anderen Worten vor, den Behälter als eine Mulde auszugestalten, bei welcher die Rückwand durch eine verschließbare Klappe gebildet ist oder zumindest eine solche Klappe aufweist. Die erwähnten beweglichen Elemente sind vorschlagsgemäß nicht als Schwallbleche ausgestaltet, sondern weisen eine Wanne auf, die in die Mulde eingesetzt ist und die sich über den Boden der Mulde erstreckt sowie über deren Seitenwände, allerdings nur über einen Teil der Höhe der Seitenwände. Dabei ist vorschlagsgemäß vorgesehen, dass die Wanne höhenbeweglich gelagert ist, so dass sie eine tiefe Feststoff-Ladestellung einnehmen kann. In dieser Feststoff-Ladestellung bildet sie den nutzbaren Laderaumboden der gesamten Mulde, so dass ein möglichst großes Aufnahmevolumen innerhalb der Mulde bereitsteht, in welches Feststoffe eingeladen werden können.

Ausgehend von dieser unteren Feststoff-Ladestellung kann die Wanne innerhalb der Mulde angehoben werden und bis in eine obere so genannte Flüssigkeits-Ladestellung verbracht werden. In dieser oberen Stellung der inneren Wanne bildet diese mit dem unteren Teil der Außenwanne einen Tank, dessen Teile durch eine klemmende Konstruktion statisch fest verbunden sind. So wird die Fahrstabiltität des Fahrzeugs garantiert. Zudem wird durch diese Wanne-in-Wanne-Konstruktion eine zuverlässige Trennung zwischen den flüssigen und den festen Transportgütern gewährleistet.

Wenn sich die innere Wanne in ihrer oberen, so genannten Flüssigkeits-Ladestellung befindet, wird unterhalb der Wanne ein regelrechter Flüssigkeitstank geschaffen, der nämlich allseits begrenzt und nach oben durch den Boden der Wanne abgeschlossen ist. Durch die Höhenverstellbarkeit der Wanne kann die Höhe der Wanne stets optimal an das zu transportierende Flüssigkeitsvolumen angepasst werden, so dass keine Wellenbewegungen in der Flüssigkeit verursacht werden können und dementsprechend ein Schwallschutz für die Flüssigkeit nicht erforderlich ist.

Vorteilhaft kann die Wanne nicht nur in den beiden äußersten Stellungen, nämlich der Flüssigkeits-Ladestellung und der Feststoff-Ladestellung arretiert werden, sondern auch in einer oder mehreren Zwischenstellungen, beispielsweise in mehreren Stufen oder auch stufenlos. Zu einer Arretierung in stufenlos wählbaren Zwischenstellungen können beispielsweise Druckkörper dienen, die als Exzenter ausgestaltet sind, oder die mittels eines Spindelantriebs in die jeweils gewünschte Höhe verstellt werden können.

Falls eine Dichtung zwischen der Wanne und der Mulde vorgesehen ist, die nicht an der Wanne angeordnet ist und automatisch stets gemeinsam mit der Wanne höhenmäßig verstellt wird, so kann diese Dichtung vorteilhaft ebenfalls höhenbeweglich gelagert sein und eine eigene so genannte Zwischenstellung einnehmen. So kann die Dichtung nicht nur in der oberen Endstellung (Flüssigkeits-Ladestellung) der Wanne, sondern auch in der jeweiligen Zwischenstellung der Wanne deren Abdichtung gegenüber der Mulde bewirken. Dazu kann die Dichtung vorteilhaft in ihrer jeweiligen Stellung bzw. Zwischenstellung arretiert werden.

Dadurch, dass sich die Wanne über einen Teil der Höhe der Seitenwände der Mulde erstreckt, wird dieser obere Teil der Seitenwände der Mulde von der Wanne verdeckt, wenn sich die Wanne in der angehobenen Flüssigkeits-Ladestellung befindet. Der darunter befindliche Teil der Mulde, der beim Flüssigtransport mit der Flüssigkeit in Kontakt kommt, wird von der Wanne abgedeckt, wenn diese sich in ihrer abgesenkten Feststoff-Ladestellung befindet, so dass eine Kontamination des Feststoffs mit Rückständen der Flüssigkeit, die sich ggf. noch an den Seitenwänden der Mulde befinden könnten, vermieden wird.

Vorteilhaft kann vorgesehen sein, dass das Maß der Höhenverstellbarkeit der Wanne höchstens so groß ist wie die Höhe der Wanne. Auf diese Weise ist sichergestellt, dass die Wanne ausgehend von einer angehobenen Flüssigkeits-Ladestellung nur so weit abgesenkt werden kann, dass die Wanne mit ihren seitlichen Wänden zuverlässig sämtliche Bereiche der Seitenwände der Mulde verdeckt, die zuvor mit Flüssigkeit hatten in Kontakt kommen können.

Vorteilhaft kann die Wanne einen Wannenboden aufweisen, der mit einer Entladeeinrichtung versehen ist. Diese Entladeeinrichtung dient dazu, Feststoffe aus dem Anhänger zu fördern. Wenn die Mulde beispielsweise als kippbare Mulde ausgestaltet ist, kann mithilfe dieser Entladeeinrichtung eine möglichst vollständige Restentleerung der Mulde sichergestellt werden. In wirtschaftlich besonders vorteilhafter Ausgestaltung des Anhängers kann jedoch vorgesehen sein, die Mulde nicht kippbar auszugestalten, so dass die Anforderungen an die Statik der Mulde erheblich reduziert werden können und der Anhänger mit einem erheblich geringeren Materialaufwand und dementsprechend besonders preisgünstig und leicht hergestellt werden kann. Die dazu vorgesehene Entladeeinrichtung kann beispielsweise als Kratzer, Schubboden - z. B. in Form eines so genannten "walking floor" -, als Schwingförderrinne o. dgl. ausgestaltet sein, wobei im Sinne einer möglichst wirtschaftlichen Herstellung des Anhängers vorteilhaft die Entladeeinrichtung als umlaufendes Förderband ausgestaltet sein kann.

Das Fahrverhalten des Anhängers kann vorteilhaft dadurch optimiert werden, dass der Anhänger einen möglichst niedrigen Schwerpunkt aufweist. Hierzu kann vorteilhaft vorgesehen sein, dass der Boden der Mulde zwischen den Laufrädern des Anhängers nach unten abgesenkt ist, also nach unten gezogen verläuft, so dass auch der ansonsten ungenutzte Freiraum zwischen den Laufrädern des Anhängers für den Flüssigtransport genutzt werden kann und einen Teil des geschaffenen Tanks bilden kann. Auch beim Feststofftransport kann dieser Freiraum vorteilhaft genutzt werden, indem sich nämlich beispielsweise die Elemente der erwähnten Entladeeinrichtung in diesen nach unten gezogenen Bereich des Bodens der Mulde erstrecken, so dass dementsprechend auch der Boden der Wanne innerhalb der Mulde möglichst tief angeordnet werden kann und die Oberkante der Entladeeinrichtung niveaugleich mit diesem möglichst tief verlaufenden Wannenboden angeordnet ist.

Zu dieser Schwerpunktabsenkung kommt als Vorteil einer solchen nach unten gezogenen Ausgestaltung des Muldenbodens hinzu, dass auf einen ansonsten üblichen eigens vorgesehenen Rahmen des Fahrgestells verzichtet werden kann. An einem solchen Rahmen sind ansonsten die Laufräder bzw. die eine oder die mehreren Achsen des Anhängers befestigt, beispielsweise indem dementsprechende Achsschuhe an dem Fahrgestellrahmen montiert sind. Bei der vorteilhaften Ausgestaltung des Anhängers können die Achsen der Laufräder unter Vermeidung eines solchen Fahrgestellrahmens unmittelbar an der Mulde befestigt sein, beispielsweise indem die erwähnten Achsschuhe unmittelbar an der Mulde befestigt sind, so dass im Ergebnis ein so genanntes integriertes Fahrgestell geschaffen wird, bei welchem das Fahrgestell des Anhängers in den Muldenboden integriert ist.

Diese Integration des Fahrgestells ist nicht nur bei einem Fest-Flüssig-Anhänger vorteilhaft, sondern kann allgemein bei Fahrzeugen genutzt werden, die eine Mulde aufweisen. Aufgrund ihrer oben offenen Bauweise und der damit verbundenen statischen Eigenschaften eignen sich Mulden eigentlich nicht für eine Integration des Fahrgestells. Vorteilhaft kann dies jedoch dennoch verwirklicht werden, wenn z. B. außen an der Mulde Laschen vorgesehen sind, welche die auftretenden Lasten über eine größere Fläche verteilen, und an denen die so genannten Achs-Anbindungen befestigt ist, statt diese Achs-Anbindungen an einem separaten Fahrgestellrahmen zu befestigen. Im Inneren der Mulde, und zwar in dem unteren Bereich, der zwischen den Rädern vorgesehen ist, können vorteilhaft Querstreben vorgesehen sein, die zwischen den Stellen verlaufen, wo sich außen an der Mulde jeweils zwei Laschen gegenüberliegen. Falls das Fahrzeug als Fest-Flüssig-Anhänger ausgestaltet ist, befinden sich diese Querstreben in dem Bereich, in dem der Tank gebildet werden kann, so dass sie bei einem Flüssigtransport von der Flüssigkeit umspült werden. Die Querstreben können in diesem Fall gegebenenfalls zu einer Beruhigung beitragen, ähnlich wie z. B. Schwallbleche. Falls das Fahrzeug eine Entladungseinrichtung in Form eines Förderbandes aufweist, können die Querstreben auch dazu dienen, das Obertrum des Bandes oder einen Gleittisch des Bandes zu stützen, so dass die ansonsten eigens dazu vorgesehenen Stützelemente entfallen können.

Vorteilhaft kann vorgesehen sein, dass zwischen der Wanne und den aufrechten Wandabschnitten der Mulde, beispielsweise deren Seitenwänden, eine Dichtung angeordnet ist, so dass ein allseits flüssigkeitsdichter Tank geschaffen ist, wenn sich die Wanne innerhalb der Mulde in ihrer angehobenen Stellung befindet. Beispielsweise kann vorgesehen sein, diese Dichtung fest an den Seitenwänden der Mulde anzuordnen, so dass die Wanne gegen die Dichtung gepresst wird, wenn die Wanne in ihre Flüssigkeitsladestellung angehoben wird. Durch die Dichtung wird jedenfalls sichergestellt, dass beim Transport von Flüssigkeiten keine Flüssigkeitsanteile zwischen der Wanne und der Mulde nach oben spritzen können, so dass auch hierdurch eine möglichst hygienische und von Rückständen der Flüssigkeit freie Ausgestaltung der Mulde sichergestellt wird, wenn diese nach einem Flüssigkeitstransport für einen Feststofftransport verwendet werden soll.

Vorteilhaft kann vorgesehen sein, dass die innere Wanne als Auftriebskörper ausgestaltet ist. Durch den Auftrieb, den die Wanne bei der Flüssigkeitsfahrt durch die Flüssigkeit erfährt, wird diese innere Wanne angehoben und dabei in wenigstens eine Dichtung gedrückt, die oberhalb der Wanne an der äußeren Mulde vorgesehen ist, oder die Wanne wird mitsamt wenigstens einer an der Wanne angeordneten Dichtung gegen ein Widerlager gedrückt, welches an der Mulde vorgesehen ist. Konstruktiv sind die Wanne, die Dichtung und die Mulde so ausgelegt, dass dadurch ein Kraftschluss entsteht, der nicht nur eine Dichtigkeit sicherstellt, die einem geschlossenen Tank gleichkommt, sondern auch einen konstruktiven Verbund der Wanne mit der äußeren Mulde schafft.

Die erwähnte Dichtung kann beispielsweise als Profildichtung in Form eines Profilstrangs mit einem S-förmigen oder Z-förmigen Querschnitt ausgestaltet sein oder als Hohlprofil ausgestaltet sein, so dass jedenfalls die Dichtung einen ausreichenden Verformungsspielraum aufweist, um eine zuverlässig dichte Anlage der Wannenoberkante bzw. der Mulde an der Dichtung sicherzustellen.

Wenn die Dichtung als Hohlprofil ausgestaltet ist, kann diese vorteilhaft aufblasbar sein, um auf diese Weise einerseits eine leichte Relativbeweglichkeit zwischen Wanne und Mulde zu ermöglichen, bei welcher ein Verschleiß der Dichtung möglichst vermieden wird, wobei andererseits, wenn sich die Wanne in ihrer angehobenen Stellung befindet, durch das Aufblasen der Dichtung ein zuverlässig dichter Anschluss der Wanne an die Muldenwände sichergestellt werden kann, der auch bei höheren auf die Dichtung einwirkenden Druckbelastungen dicht bleibt, wie diese während des Fahrbetriebs beim Flüssigkeitstransport auftreten können.

Vorteilhaft kann die Höhenverstellung der Wanne innerhalb der Mulde mithilfe von hydraulischen oder pneumatischen Arbeitszylindern erfolgen. Dabei kann die Anordnung dieser Arbeitszylinder sowohl stehend als auch hängend vorgesehen sein. Bei hängenden Zylindern werden die Enden der Arbeitszylinder an der Mulde oberhalb der Wanne befestigt, und die Arbeitszylinder erstrecken sich von dort hinab bis zur Wanne, wo die Arbeitszylinder mit ihren unteren Enden befestigt sind. Auf diese Weise befinden sich die Arbeitszylinder stets außerhalb der Flüssigkeit, die ja stets unterhalb der Wanne transportiert wird, so dass eine möglichst lange Funktionsfähigkeit der Arbeitszylinder mit möglichst einfachen Mitteln sichergestellt werden kann, da chemische Angriffe, wie sie durch die Flüssigkeit nicht ausgeschlossen werden können, vermieden werden. Zudem sind bei der hängenden Anordnung die Arbeitszylinder im Wartungsfall besonders einfach zugänglich.

Vorteilhaft kann an der Wanne einerseits und an der Mulde andererseits ein Führungselement und eine damit zusammenwirkende Aufnahme vorgesehen sein, so dass die Wanne in eine vorbestimmte Position geführt wird, wenn die Wanne sich ihrer angehobenen höchsten Stellung nähert. Hierdurch kann erstens die Wanne sicher fixiert werden, ohne im Fahrbetrieb des Anhängers störende Geräusche zu verursachen, und zweitens kann so eine definierte Anlage von Bauteilen sichergestellt werden, welche zur Abdichtung des Flüssigkeitstanks vorgesehen sein können.

Vorteilhaft kann zur Abdichtung des Flüssigkeitstanks eine verformbare Stempeldichtung vorgesehen sein, also eine Dichtung, die sich wie ein Stempel oder Stopfen in eine Öffnung erstreckt und so durch hohe Flächenpressungen eine zuverlässige Abdichtung sicherstellt. Die Stempeldichtung weist eine elastisch verformbare Dichtfläche auf, so dass sie einerseits eine flache Ruhestellung einnehmen kann und andererseits stopfenartig ihre Dichtungsstellung einnehmen kann, indem sie aus ihrem flachen Zustand in eine gewölbte Form verformt wird.

Die Stempeldichtung kann vorteilhaft mit mehreren teleskopischen Stempeln zusammenwirken, die über die verformbare Dichtfläche verteilt angeordnet sind. Die Stempel bewirken, wenn sie in ihre ausgefahrene Stellung teleskopiert werden, dass die zuvor flache Dichtfläche der Stempeldichtung in ihre gewölbte Dichtungsstellung verformt wird.

Vorteilhaft kann die Stempeldichtung an einem flachen, als Heckschwert bezeichneten Träger angeordnet sein, der in aufrechter Richtung beweglich ist. So kann das Heckschwert zwischen einer oberen Dichtungsstellung und einer unteren Entleerungsstellung aufwärts bzw. abwärts bewegt werden. Wenn das Heckschwert seine Dichtungsstellung einnimmt und auch die Stempeldichtung ihrerseits aus ihrer flachen Ruhestellung in ihre Dichtungsstellung verformt ist, verschließt sie die Öffnung des Flüssigkeitstanks. Dabei ist die Wanne gegenüber ihrer tiefsten Stellung, der Feststoff-Ladestellung, angehoben, um den Tank zu schaffen. Der Tank kann später mittels eine Pumpe entleert werden. Wenn die Wanne in ihre Feststoff-Ladestellung abgesenkt wird, um ein möglichst großes Feststoff-Ladevolumen in der Mulde bereitzustellen, kann vorteilhaft auch das Heckschwert in seine untere Entleerungsstellung abgesenkt werden. So wird die Entleerung der Feststoffe aus der Mulde, beispielsweise mittels einer Entladungseinrichtung, nicht behindert und die Feststoffe können über eine möglichst tiefe Schüttkante aus der Mulde ausgebracht werden.

Ausführungsbeispiele der Erfindung werden anhand der rein schematischen Darstellungen nachfolgend näher erläutert. Dabei zeigt
- Fig. 1: Eine perspektivische Ansicht auf einen Fest-Flüssig-Anhänger,
- Fig. 2: einen Vertikalschnitt durch ein erstes Ausführungsbeispiel einer Seitenwand des Anhängers im Bereich einer längs umlaufenden Dichtung,
- Fig. 3: eine Ansicht ähnlich Fig. 2, bei einem zweiten Ausführungsbeispiel einer Seitenwand, in einer ersten Stellung der Wanne,
- Fig. 4: eine Ansicht ähnlich Fig. 3, in einer zweiten Stellung der Wanne,
- Fig. 5: eine Anordnung zur Heckabdichtung, in perspektivischer Ansicht schräg von hinten, und
- Fig. 6: eine Ansicht ähnlich Fig. 5, in perspektivischer Ansicht schräg von vorn.

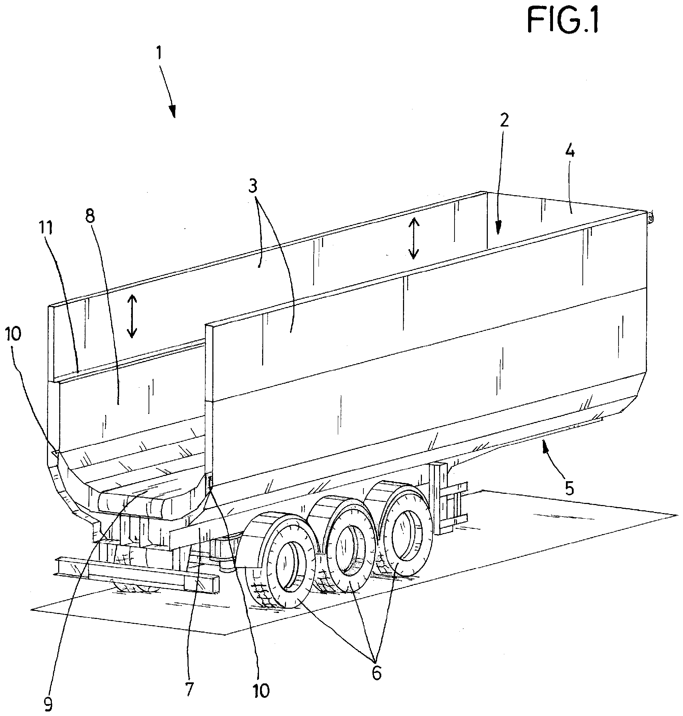

In Fig. 1 ist mit 1 insgesamt ein Anhänger bezeichnet, der als Fest-Flüssig-Anhänger zum wahlweisen Transport fester oder flüssiger Güter dient. Der Anhänger 1 weist eine Mulde 2 auf, die zwei Seitenwände 3, eine vordere Stirnwand 4 und einen Boden 5 aufweist. Die Mulde 2 wird nach hinten abgeschlossen durch eine in Fig. 1 nicht dargestellte Klappe. Der Boden 5 verläuft im vorderen, in Fig. 1 rechts dargestellten Bereich des Anhängers 1 vergleichsweise eben, so dass dort ein Freiraum geschaffen wird, innerhalb dessen einerseits ein Königszapfen angeordnet werden kann, um den Anhänger 1 als Sattelauflieger zu nutzen, und wobei um diesen Königszapfen herum ein ausreichender Freiraum besteht, um Schwenkbewegungen des Anhängers 1 gegenüber einem Zugfahrzeug bei Kurvenfahrt zu ermöglichen.

Hinter diesem erwähnten Freiraum ist der Boden 5 zwischen Laufrädern 6 des Anhängers 1 nach unten gezogen und weist dort eine Vertiefung 7 auf, so dass ein möglichst tiefer Schwerpunkt des Anhängers 1 erzielt wird.

Innerhalb der Mulde 2 ist eine Wanne 8 höhenbeweglich angeordnet, wie durch die Doppelpfeile oberhalb der Wanne 8 angedeutet ist. Bei der dargestellten Ausrichtung der Wanne 8 befindet sich diese in ihrer abgesenkten Feststoff-Ladestellung, in welcher sich die Seitenwände 3 der Mulde 2 höher erstrecken als die Wanne 8. Ausgehend von dieser Stellung kann die Wanne 8 mittels hängend oder stehend angeordneter Arbeitszylinder angehoben werden, so dass zwischen dem Boden 5 der Mulde 2 und der Wanne 8 ein regelrechter Tank geschaffen wird, in welchem Flüssigkeit spritzgeschützt transportiert werden kann.

Im Wannenboden 5 ist eine Entladeeinrichtung 9 vorgesehen, die bei dem dargestellten Ausführungsbeispiel als Förderband ausgestaltet ist, wobei die gesamte Mulde 2 nicht kippbar ausgestaltet ist und die Entleerung von fester Ladung aus der Mulde 2 mithilfe der Entladeeinrichtung 9 erfolgt.

Die Wanne 8 weist außen an ihren beiden Längsseiten jeweils eine längs verlaufende Rippe 10 auf, und die Mulde 2 weist innen an ihren beiden Längsseiten jeweils darüber ein Widerlager 11 auf. Zwischen jedem Widerlager 11 und einer darunter befindlichen Rippe 10 befindet sich eine in der Zeichnung nicht dargestellte Dichtung, die ortsfest am Widerlager 11 oder höhenbeweglich an der Rippe 10 vorgesehen sein kann. Bei angehobener Wanne 8 stellen diese und weitere Dichtungen einen flüssigkeitsdichten Anschluss der Wanne 8 an die Mulde 2 sicher, nämlich an die Seitenwände 3, die vordere Stirnwand 4 und die in Fig. 1 nicht dargestellte hintere Klappe.

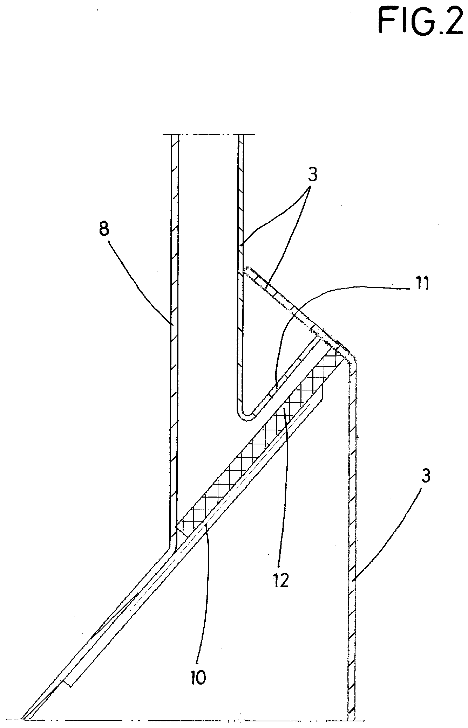

Fig. 2 zeigt einen Vertikalschnitt durch eine Seitenwand 3 im Bereich der Rippe 10 und des Widerlagers 11 bei einem zweiten Ausführungsbeispiel eines vorschlagsgemäßen Anhängers 1. Die Rippe 10 der Wanne 8 trägt eine Dichtung 12, die als flache Streifendichtung ausgestaltet ist und die bereits in der dargestellten Stellung der Wanne 8 gegen die Seitenwand 3 gedrückt wird. Wenn die Wanne 8 noch weiter nach oben angehoben wird, erhöht sich aufgrund des schrägen Verlaufs der Seitenwand 3 in diesem Bereich der Anpressdruck, mit dem die Dichtung 12 gegen die Seitenwand 3 gedrückt wird. Zudem wird die Dichtung 12 schließlich gegen das Widerlager 11 gedrückt.

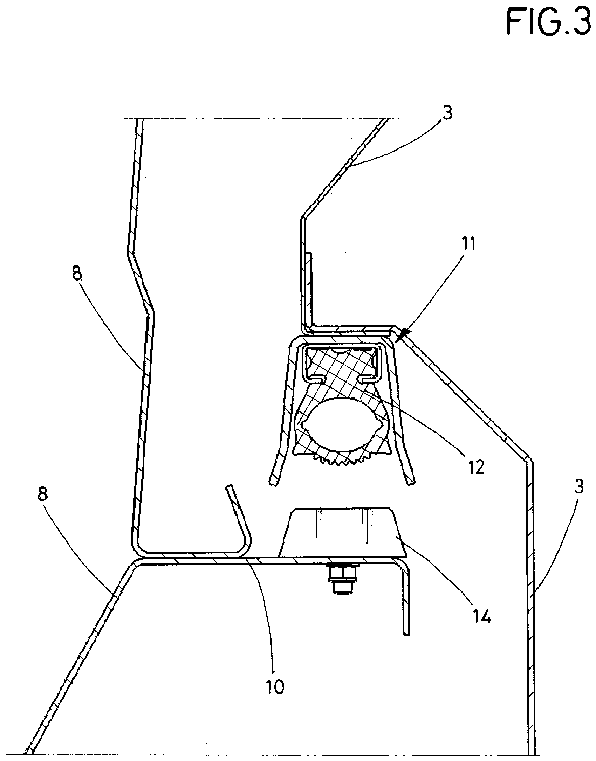

Fig. 3 zeigt ähnlich wie Fig. 2 einen Vertikalschnitt durch eine Seitenwand 3 im Bereich der Rippe 10 und des Widerlagers 11, jedoch bei einem dritten Ausführungsbeispiel eines vorschlagsgemäßen Anhängers 1. Die Wanne 8 ist mehrteilig aufgebaut und die Rippe 10 wird durch ein eigenes Bauteil gebildet, welches gleichzeitig einen unteren Abschnitt der Wanne 8 bildet. Die Rippe 10 trägt ein Führungselement 14, das als Führungsleiste ausgestaltet ist, die unterhalb der Dichtung 12 verläuft und deren Querschnitt sich nach oben verringert. Das Widerlager 11 weist einen dazu komplementären, nach unten offenen und im wesentlichen U-förmigen Querschnitt auf, der sich nach unten erweitert, so dass das Widerlager 11 eine Aufnahme für das Führungselement 14 bildet. Innerhalb dieser Aufnahme trägt das Widerlager 11 eine Dichtung 12, die als Hohlprofildichtung ausgestaltet ist.

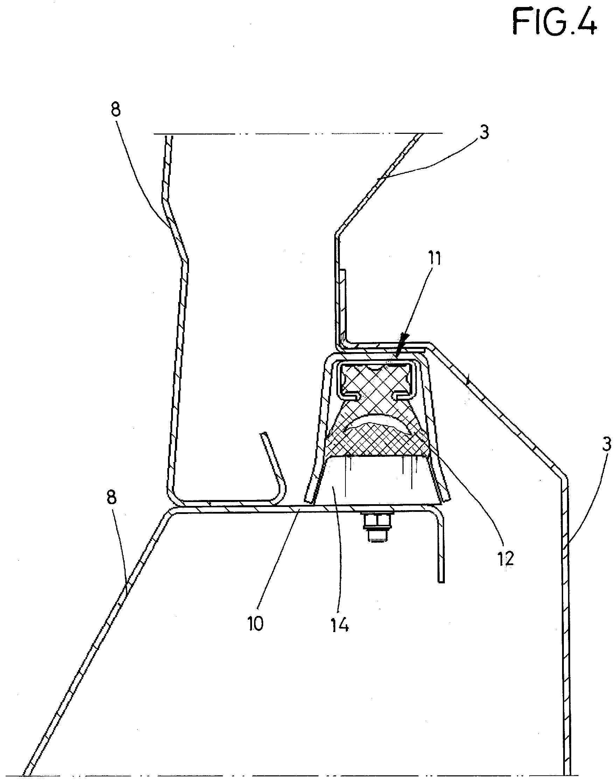

Wenn die Wanne 8 nach oben angehoben wird, gerät zunächst das Führungselement 14 in den offenen, U-förmigen Querschnitt des Widerlagers 11 und liegt schließlich, wie aus Fig. 4 ersichtlich, der Dichtung 12 an und drückt diese Hohlprofildichtung zusammen. Über die Dichtwirkung hinausgehend, die durch den Kontakt des Führungselements 14 mit der Dichtung 12 bewirkt wird, ergibt sich eine Abdichtungswirkung in Art einer Labyrinthdichtung, wenn Flüssigkeit aus dem Tank unterhalb der Wanne 8 in den Spalt zwischen dem Führungselement 14 und einem Schenkel des U-förmigen Widerlagers 11 einzudringen bestrebt ist, dann zwischen dem Führungselement 14 und der Dichtung 12 hindurch muss, und schließlich durch den gegenüberliegenden Spalt zwischen dem Führungselement 14 und dem zweiten Schenkel des U-förmigen Widerlagers 11 hindurch muss.

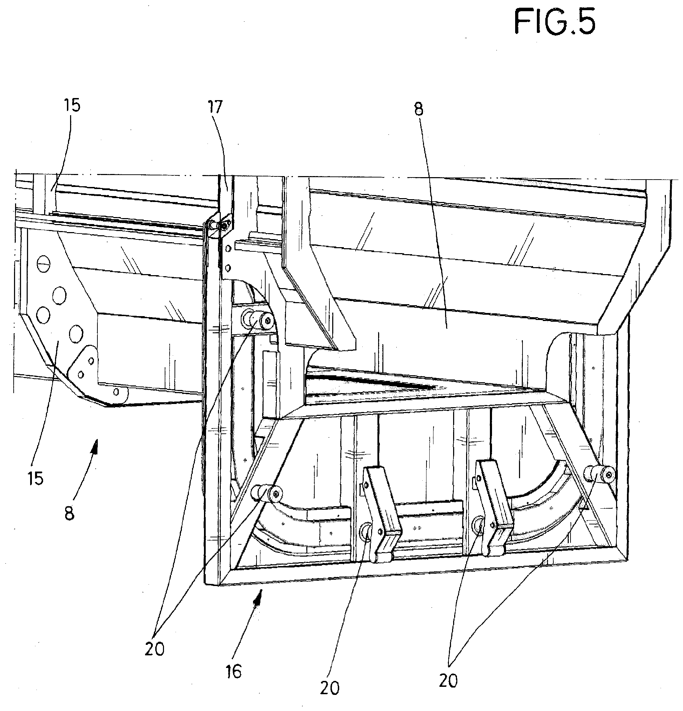

Fig. 5 zeigt schräg von hinten eine Ansicht einer Wanne 8, wobei außen seitlich sowie unten an der Wanne 8 Aussteifungsrippen 15 vorgesehen sind. An der Wanne 8 ragt ein so genanntes Heckschwert 16 nach unten, welches auf und ab beweglich ist und an den Muldenwänden in einer besonders großen Aussteifungsrippe geführt ist, die als Führungsrippe 17 bezeichnet ist.

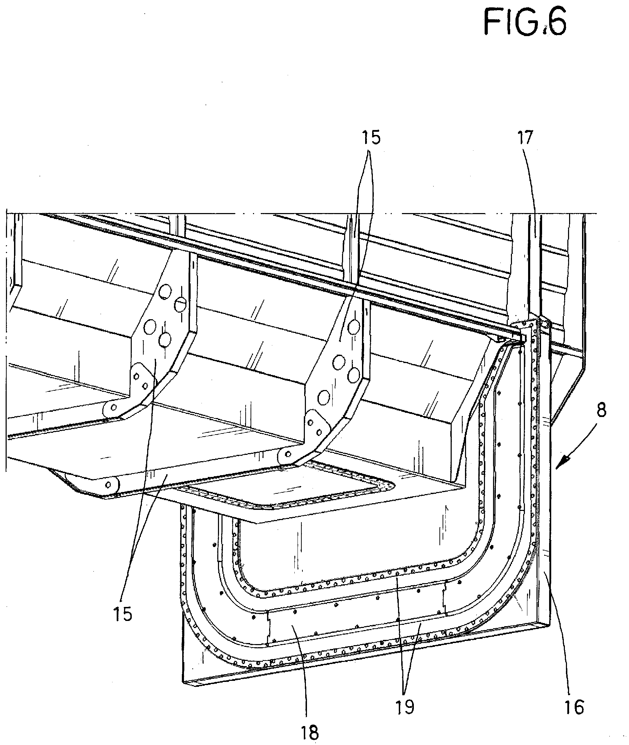

Fig. 6 zeigt das Heckschwert 16 schräg von vorn. Dabei ist eine U-förmig verlaufende, so genannte Stempeldichtung 18 erkennbar sowie Gleitstreifen 19, welche um die Stempeldichtung 18 herum verlaufen. Die Stempeldichtung 18 besteht aus einem stark dehnbaren Material, das zerstörungsfrei bis auf seine siebenfache Länge gedehnt werden kann. In Fig. 6 ist die Stempeldichtung 18 in ihrer flachen Ruhestellung dargestellt, in welcher sie problemlos und verschleißarm auf und ab bewegt werden kann. Die Gleitstreifen 19 helfen während dieser Bewegungen, reibenden Kontakt der Stempeldichtung 18 mit benachbarten Bauteilen zu verringern, so dass einerseits eine leichtgängige Beweglichkeit sichergestellt ist und andererseits ein Verschleiß des Materials der Stempeldichtung 18 verringert oder vermieden wird.

Aus ihrer flachen Ruhestellung kann die Stempeldichtung 18 mittels mehrerer Stempel 20, die in Fig. 5 ersichtlich sind, in eine vorgewölbte Dichtungsstellung verformt werden. In ihrer Dichtungsstellung verschließt die Stempeldichtung 18 ähnlich wie ein Stopfen die U-förmige heckseitige Öffnung des Tanks, der sich bei angehobener Wanne 8 zwischen der Wanne 8 und dem Boden 5 des Anhängers 1 ergibt. Zum Entleeren des Tanks kann zunächst die Stempeldichtung 18 wieder in ihre Ruhestellung gebracht werden, indem die Stempel 20 zurückbewegt werden und sich die Stempeldichtung 18 aufgrund ihrer Materialelastizität automatisch wieder zurückverformt. Anschließend kann das Heckschwert 16 vertikal entlang der Führungsrippen 17 bewegt werden, um die Öffnung des Tanks maximal zu öffnen.

Zusätzlich zu dem Heckschwert 16 ist die erwähne, an sich bekannte, in den Zeichnungen nicht dargestellt Heckklappe vorgesehen, um die Mulde 2 heckseitig zu schließen.

## Patentansprüche

1. Fest-Flüssig-Anhänger (1),
mit einem Aufbau, welcher als flüssigkeitsdichter Behälter ausgestaltet ist,
wobei der Behälter einen Boden (5), Seitenwände (3), eine vordere Stirnwand (4) und eine hintere Rückwand aufweist, und oberhalb des Bodens (5) sowie innerhalb dieses Behälters bewegliche Elemente angeordnet sind,
**dadurch gekennzeichnet,**
**dass** der Behälter als Mulde (2) ausgestaltet ist,
die Rückwand eine wahlweise zu öffnende oder flüssigkeitsdicht zu schließende Klappe aufweist,
die beweglichen Elemente eine Wanne (8) aufweisen, welche sich über den Boden (5) und über einen Teil der Höhe der Seitenwände (3) erstreckt,
wobei die Wanne (8) höhenbeweglich gelagert ist zwischen einer tiefen, einen nutzbaren Laderaumboden der Mulde (2) bildenden Feststoff-Ladestellung und einer angehobenen Flüssigkeits-Ladestellung, in welcher unterhalb der Wanne (8) ein Flüssigkeitstank geschaffen ist.

2. Anhänger nach Anspruch 1,
**dadurch gekennzeichnet,**
**dass** das Maß der Höhenverstellung höchstens so groß ist wie die Höhe der Wanne (8).

3. Anhänger nach Anspruch 1 oder 2,
**dadurch gekennzeichnet,**
**dass** die Wanne (8) einen Wannenboden aufweist, der mit einer Entladeeinrichtung (9) versehen ist.

4. Anhänger nach Anspruch 3,
**dadurch gekennzeichnet,**
**dass** die Entladeeinrichtung (9) als umlaufendes Förderband ausgestaltet ist.

5. Anhänger nach einem der vorhergehenden Ansprüche, **dadurch gekennzeichnet,**
**dass** der Boden (5) der Mulde (2) zwischen den Laufrädern (6) des Anhängers (1) nach unten gezogen verläuft und das Fahrgestell des Anhängers (1) in den Boden (5) der Mulde (2) integriert ist,
derart, dass die Achsen der Laufräder (6) unter Vermeidung eines Fahrgestellrahmens an der Mulde (2) befestigt sind.

6. Anhänger nach einem der vorhergehenden Ansprüche, **dadurch gekennzeichnet,**
**dass** zwischen der Wanne (8) und den Seitenwänden (3) eine Dichtung (12) angeordnet ist, derart, dass bei angehobener Wanne (8) ein nach oben spritzgeschützter, flüssigkeitsdichter Tank geschaffen ist.

7. Anhänger nach einem der vorhergehenden Ansprüche, **dadurch gekennzeichnet,**
**dass** die innere Wanne (8) als Auftriebskörper ausgearbeitet ist, derart, dass die Wanne (8) durch die transportierte Flüssigkeit in eine umlaufende Dichtung (12) gedrückt wird und somit die Wanne (8) kraftschlüssig mit der Mulde (2) verbunden ist.

8. Anhänger nach Anspruch 6 oder 7,
**dadurch gekennzeichnet,**
**dass** die Dichtung (12) als Profilstrang mit einem S-förmigen oder Z-förmigen Querschnitt ausgestaltet ist.

9. Anhänger nach Anspruch 6 oder 7,
**dadurch gekennzeichnet,**
**dass** die Dichtung (12) als Hohlprofil ausgestaltet ist.

10. Anhänger nach Anspruch 9,
**dadurch gekennzeichnet,**
**dass** die Dichtung (12) aufblasbar ausgestaltet ist.

11. Anhänger nach einem der vorhergehenden Ansprüche, **dadurch gekennzeichnet,**
**dass** zur Höhenverstellung der Wanne (8) Arbeitszylinder vorgesehen sind.

12. Anhänger nach einem der vorhergehenden Ansprüche, **dadurch gekennzeichnet,**
**dass** an der Wanne (8) einerseits und der Mulde (2) andererseits ein Führungselement (14) und eine damit zusammenwirkende Aufnahme vorgesehen sind, derart, dass die Wanne (8) in eine vorbestimmte Position geführt wird, wenn die Wanne (8) sich ihrer angehobenen höchsten Stellung nähert.

13. Anhänger nach einem der vorhergehenden Ansprüche, **dadurch gekennzeichnet,**
**dass** zur Abdichtung des unterhalb der Wanne (8) geschaffenen Flüssigkeitstanks eine Stempeldichtung (18) vorgesehen ist,
die eine elastisch verformbare Dichtfläche aufweist, welche aus einer flachen Ruhestellung stopfenartig in eine gewölbte Dichtungsstellung verformbar ist.

14. Anhänger nach Anspruch 13,
**dadurch gekennzeichnet,**
**dass** mehrere teleskopische Stempel (20) über die verformbare Dichtfläche verteilt angeordnet sind,
wobei die Stempel (20) in ihrer ausgefahrenen Teleskopstellung die Dichtfläche der Stempeldichtung (18) in ihre gewölbte Dichtungsstellung verformend angeordnet sind.

15. Anhänger nach Anspruch 13,
**dadurch gekennzeichnet,**
**dass** die Stempeldichtung (18) an einem flachen, als Heckschwert (16) bezeichneten Träger angeordnet ist, wobei das Heckschwert (16) in aufrechter Richtung beweglich ist,
derart, dass das Heckschwert (16) zwischen einer Dichtungsstellung, in welcher die ihrer Dichtungsstellung einnehmende Stempeldichtung (18) die Öffnung des unterhalb der Wanne (8) geschaffenen Flüssigkeitstanks verschließt und einer Entleerungsstellung beweglich ist, in welcher das Heckschwert (16) wenigstens einen unteren Bereich der Öffnung freigibt.

16. Anhänger nach einem der vorhergehenden Ansprüche, **dadurch gekennzeichnet,**
**dass** die Wanne (8) in einer Zwischenstellung, die zwischen ihrer Feststoff-Ladestellung und ihrer FlüssigkeitsLadestellung vorgesehen ist, arretierbar ist.

17. Anhänger nach den Ansprüchen 7 und 16,
**dadurch gekennzeichnet,**
**dass** die Dichtung (12) höhenverstellbar ist und ebenfalls in einer so genannten Zwischenstellung arretierbar ist, in welcher sie die in ihrer Zwischenstellung befindliche Wanne (8) gegenüber der Mulde (2) abdichtet.

## Claims

1. Solid-liquid trailer (1), constructed as a liquid-tight container, where such container incorporates a bottom portion (5), side walls (3), a front end wall (4) and a rear end wall and where movable elements are disposed above the bottom portion (5) and inside the container, **characterised in that** the container is constructed as a trough (2), the rear wall incorporates a flap to be optionally opened or liquidtightly closed, the movable elements incorporate a tub (8) which extends over the bottom portion (5) and over a part of the height of the side walls (3), where the tub (8) is height-adjustably mounted between a low solid loading position forming a usable loading space at the bottom of the trough (2) and a raised liquid loading position in which a liquid tank is formed underneath the tub (8).

2. Trailer in accordance with claim 1, **characterised in that** the amount of height adjustment is no greater than the height of the tub (8).

3. Trailer in accordance with claim 1 or 2, **characterised in that** the tub (8) incorporates a bottom portion that is provided with an unloading means (9).

4. Trailer in accordance with claim 3, **characterised in that** the unloading means (9) is constructed as an endless conveyor belt.

5. Trailer in accordance with any one of the foregoing claims, **characterised in that** the bottom portion (5) of the trough (2), when lowered, runs between the running wheels (6) of the trailer (1) and that the chassis of the trailer (1) is integrated into the bottom portion (5) of the trough (2) so that the axles of the running wheels (6) are fastened to the trough (2) without the need for a chassis frame.

6. Trailer in accordance with any one of the foregoing claims, **characterised in that** disposed between the tub (8) and the side-walls (3) is a seal (12) so that, when the tub (8) is lifted, an upwardly splash-proof, liquid-tight tank is formed.

7. Trailer in accordance with any one of the foregoing claims, **characterised in that** the inner tub (8) is constructed as a buoyancy means so that the tub (8) is pressed into an all-round seal (12) by the transported liquid and the tub (8) is therefore connected positively to the trough (2).

8. Trailer in accordance with claim 6 or 7, **characterised in that** the seal (12) is constructed as a profiled strip having an S-shaped or Z-shaped cross-section.

9. Trailer in accordance with claim 6 or 7, **characterised in that** the seal (12) is constructed as a hollow profiled section.

10. Trailer in accordance with claim 9, **characterised in that** the seal (12) is constructed to be inflatable.

11. Trailer in accordance with any one of the foregoing claims, **characterised in that** power cylinders are provided for to adjust the height of the tub (8).

12. Trailer in accordance with any one of the foregoing claims, **characterised in that** a guide member (14) and a holding member co-acting with it are provided for on the tub (8) and the trough (2) respectively so that the tub (8) is guided into a predetermined position when the tub (8) is close to its highest raised position.

13. Trailer in accordance with any one of the foregoing claims, **characterised in that** a push-pin seal incorporating an elastically deformable sealing surface that can be deformed from a flat resting position into a convex sealing position like a plug is provided for to seal off the liquid tank formed underneath the tub (8).

14. Trailer in accordance with claim 13, **characterised in that** a number of extendable push pins (20) are disposed over the deformable sealing surface, which push pins (20), when in the extended position, are arranged so as to deform the sealing surface of the push-pin seal (18) into its convex sealing position.

15. Trailer in accordance with claim 13, **characterised in that** the push-pin seal (18) is disposed on a flat bearer termed rear shutter (16), where the rear shutter (16) can be moved in a perpendicular direction so that the rear shutter (16) can be moved between a sealing position in which the push-pin seal (18), when moving to its sealing position, seals the opening in the liquid tank formed below the tub (8) and an emptying position in which the rear shutter (16) uncovers at least a lower part of the opening.

16. Trailer in accordance with any one of the foregoing claims, **characterised in that** the tub (8) can be locked in an intermediate position provided for between its solid loading position and its liquid loading position.

17. Trailer in accordance with claims 7 and 16, **characterised in that** the seal (12) is height-adjustable and can also be locked in a so-called intermediate position in which the seal (12), when in its intermediate position, seals the tub (8) against the trough (2).

## Revendications

1. Remorque (1) pour matières solides et liquides comprenant une carrosserie configurée en réservoir étanche aux liquides, sachant que le réservoir présente un fond (5), des parois latérales (3), une paroi frontale (4) à l'avant et une paroi arrière, et qu'au dessus du fond (5) ainsi qu'à l'intérieur de ce réservoir sont agencés des éléments mobiles, **caractérisée en ce que** le récipient est configuré en benne (2), que la paroi arrière présente une trappe qu'il est possible au choix d'ouvrir ou de fermer de façon étanche pour les liquides, **en ce que** les éléments mobiles présentent une cuve (8) qui s'étend au-dessus du fond (5) et sur une partie de la hauteur des parois latérales (3), sachant que la cuve (8) est en appui sur palier lui permettant de se déplacer en hauteur entre une position profonde créant un fond de benne (2) utilisable comme compartiment de chargement et permettant de charger des matières solides, et une position haussée permettant de charger des liquides, dans laquelle un réservoir de liquide est ménagé en dessous de la cuve (8).

2. Remorque selon la revendication 1, **caractérisée en ce que** le quantum de déplacement en hauteur est au moins aussi important que la hauteur de la cuve (8).

3. Remorque selon la revendication 1 ou 2, **caractérisée en ce que** la cuve (8) présente un fond doté d'un équipement de déchargement (9).

4. Remorque selon la revendication 3, **caractérisée en ce que** l'équipement de déchargement (9) est configuré en tapis convoyeur tournant en boucle.

5. Remorque selon l'une des revendications précédentes, **caractérisée en ce que** le fond (5) de la benne (2) entre les roues (6) de la remorque (1) présente un tracé s'étirant vers le bas et que le châssis de la remorque (1) est intégré dans le fond (5) de la benne (2), de sorte que les essieux des roues (6) sont fixés contre la benne (2) pour faire l'économie d'un cadre de châssis de roulement.

6. Remorque selon l'une des revendications précédentes, **caractérisée en ce qu**'entre la cuve (8) et les parois latérales (3) est agencé un joint (12) de sorte à créer, lorsque la cuve (8) est soulevée, un réservoir protégé contre les éclaboussures vers le haut et étanche aux liquides.

7. Remorque selon l'une des revendications précédentes, **caractérisée en ce que** la cuve intérieure (8) est configurée comme corps flottant de sorte que la cuve (8) est poussée contre un joint périphérique (12) par le liquide transporté et que de la sorte la cuve (8) est reliée par adhérence de forces avec la benne (2).

8. Remorque selon la revendication 6 ou 7, **caractérisée en ce que** le joint (12) est configuré en boudin profilé présentant une section en S ou en Z.

9. Remorque selon la revendication 6 ou 7, **caractérisée en ce que** le joint (12) est configuré en profilé creux.

10. Remorque selon la revendication 9, **caractérisée en ce que** le joint (12) est configuré gonflable.

11. Remorque selon l'une des revendications précédentes, **caractérisée en ce que** des vérins de travail sont prévus pour déplacer la cuve (8) en hauteur.

12. Remorque selon l'une des revendications précédentes, **caractérisée en ce que** contre la cuve (8) d'une part et contre la benne (2) d'autre part sont prévus un élément de guidage (14) et un réceptacle interagissant avec lui, de sorte que la cuve (8) est guidée dans une position prédéfinie lorsque la cuve (8) s'approche de sa position haussée la plus haute.

13. Remorque selon l'une des revendications précédentes, **caractérisée en ce que** pour étanchéiser le réservoir de liquide créé en dessous de la cuve (8), un joint tampon (18) est prévu qui présente une surface d'étanchéité déformable élastiquement, déformable depuis une position de repos plate rappelant un bouchon vers une position d'étanchéité bombée.

14. Remorque selon la revendication 13, **caractérisée en ce que** sont agencés plusieurs tampons (20) télescopiques répartis sur la surface d'étanchéité déformable, sachant que les tampons (20) sont agencés, dans leur position télescopique sortie, de façon à déformer la surface d'étanchéité du joint (18) de tampon pour lui conférer sa position d'étanchéité bombée.

15. Remorque selon la revendication 13, **caractérisée en ce que** le joint (18) de tampon est agencé contre un support plat appelé lame arrière (16), sachant que la lame arrière (16) est déplaçable en direction redressée de sorte que la lame arrière (16) est déplaçable entre une position d'étanchéité dans laquelle le joint (18) à tampon prenant sa position d'étanchéité obture l'orifice du réservoir de liquide créé en dessous de la cuve (8), et une position de vidange dans laquelle la lame arrière (16) libère au moins une partie inférieure de l'orifice.

16. Remorque selon l'une des revendications précédentes, **caractérisée en ce que** la cuve (8) peut être retenue dans une position intermédiaire prévue entre sa position de chargement de matières solides et sa position de chargement de matières liquides.

17. Remorque selon les revendications 7 et 16, **caractérisée en ce que** le joint (12) est déplaçable en hauteur et qu'il peut également être retenu sur une position dite intermédiaire dans laquelle il étanchéise, par rapport à la benne (2), la cuve (8) qui se trouve sur sa position intermédiaire.
